Europäisches Patentamt

(19) European Patent Office

Office européen des brevets

(11) Veröffentlichungsnummer : **0 076 510 B2**

(12) **NEUE EUROPÄISCHE PATENTSCHRIFT**

(45) Veröffentlichungstag der neuen Patentschrift :
25.09.91 Patentblatt 91/39

(51) Int. Cl.⁵ : **B05B 9/03**

(21) Anmeldenummer : 82109166.7

(22) Anmeldetag : 04.10.82

(54) Spritzpistole.

(30) Priorität : 06.10.81 DE 3139724

(43) Veröffentlichungstag der Anmeldung :
13.04.83 Patentblatt 83/15

(45) Bekanntmachung des Hinweises auf die
Patenterteilung :
23.04.86 Patentblatt 86/17

(45) Bekanntmachung des Hinweises auf die
Entscheidung über den Einspruch :
25.09.91 Patentblatt 91/39

(84) Benannte Vertragsstaaten :
CH DE FR GB IT LI

(56) Entgegenhaltungen :
CH-A- 403 043

(56) Entgegenhaltungen :
DE-A- 2 324 174
DE-A- 3 003 384
DE-A- 3 038 685
Prospekt der Fa. Radio-Rim GmbH München
"Rim-electronic 75", II.Auflage, S. 383
"Halbleiter-Schaltungstechnik", U.Tietze,
Ch.Schenk, 3. Auflage Nachdruck 1976, S. 657,
658

(73) Patentinhaber : J. Wagner GmbH
Eisenbahnstrasse 18-24
W-7990 Friedrichshafen 1 (DE)

(72) Erfinder : Boll, Hans-Joachim, Dipl.-Phys.
Döllenstrasse 23
W-7778 Markdorf (DE)

(74) Vertreter : Münzhuber, Robert, Dipl.-Phys.
Patentanwalt Rumfordstrasse 10
W-8000 München 5 (DE)

EP 0 076 510 B2

## Beschreibung

Die Erfindung betrifft eine Spritzpistole mit einem Pumpkolben und einer aus einer Spule und einem Schwinganker bestehenden Antriebsordnung, die aus einem Eingang zum Anschluss an ein Wechselstromnetz, einem zur Schwingankerspule führenden Ausgang, einer mittels eines Umschalters wahlweise zuschaltbaren Halbwellenunterdrückungsschaltung und aus einem gemeinsam mit der Halbwellenunterdrückungsschaltung durch den Umschalter zu- und abschaltbaren Phasenanschnittskreis besteht, der ein aus einem festen Widerstand und einem Kondensator bestehendes Zeitglied aufweist.

Bei Spritzpistolen mit durch einen Schwinganker angetriebenen Pumpkolben wird im allgemeinen so vorgegangen, dass die Schwingankerspule im wesentlichen unmittelbar am Wechselstromnetz liegt, was dazu führt, dass der Pumpkolben 6000 Hübe/min ausführt. Durch entsprechende Auslegung der gesamten Anordnung, insbesondere Schwinganker, Pumpkolben, Rückstellfeder, Düse usw., wird erreicht, dass der Zerstäubungsgrad für einen vorgegebenen, maximalen Farbdurchsatz der Pistole sehr gut ist, das heisst die Farbe fein zerstäubt wird. Es bleibt aber auch dann noch eine zufriedenstellende Feinzerstäubung erhalten, wenn die Farbzuführung gedrosselt, der Farbdurchsatz also verringert wird. Anders ausgedrückt, der Zerstäubungsgrad bleibt über einen bestimmten Farbdurchsatzbereich im wesentlichen gleich. Ein Nachteil bei diesen bekannten Farbspritzpistolen ist jedoch, dass auch bei gedrosseltem Farbdurchsatz mit der hohen Kolbenfrequenz von 6000 Hüben/min gearbeitet werden muss, also bei einer Kolbenfrequenz, die zu Verschleiss und zu recht erheblichen Geräuschen führt. Es sind deshalb Farbspritzpistolen auf den Markt gekommen, bei denen die Kolbenfrequenz wahlweise - also für kleine Farbdurchsatzmengen - von 6000 auf 3000 Hübe/min vermindert werden kann. Diese Frequenzhalbierung erfolgt in der Weise, dass zwischen Netz und Schwingankerspule eine Speiseund Steuerschaltung vorgesehen ist, die eine Halbwellenunterdrückungsschaltung enthält, die die Halbwellen der einen Polarität des Wechselstroms unterdrückt. Befriedigende Ergebnisse wurden jedoch dabei nicht erreicht, was darauf zurückzuführen ist, dass die gesamte Anordnung ja auf den Betrieb mit 6000 Hüben pro Minute optimiert ist und sich deshalb bei einer Halbierung der Gesamtausstossmenge der Farbe bei gleicher Düsengrösse eine beträchtliche Verschlechterung der Zerstäubungsqualität ergibt. Ausserdem führt die sich aus der Halbwellenunterdrükkung zwangsläufig ergebende Erhöhung von Spitzen- und Effektivstrom zu einer beträchtlichen Erhitzung der Schwingankerspule. Ferner ist aus der DE-A 3 003 384 eine Steuerschaltung für eine aus einer Spule und einem Schwinganker bestehende Antriebsanordnung des Pumpkolbens einer Spritzpistole bekannt, die einen Phasenanschnittkreis mit einem einen veränderbaren Widerstand enthaltenden Zeitglied aufweist. Dabei ist in dieser Vorveröffentlichung zwar erwähnt, dass die für Vollwellenbetrieb ausgelegte Schaltung durch Austausch eines Schaltelements für Halbwellenbetrieb ausgelegt werden kann, jedoch besteht keine Umschaltmöglichkeit, so dass also entweder die erwähnten Nachteile der hohen Frequenz von 6000 Hüben/min oder die erwähnten Nachteile der niedrigen Frequenz von 3000 Hüben/min in Kauf genommen werden müssen. Ferner ist eine Spritzpistole auf dem Markt, bei der zusammen mit der Umschaltung auf den Betrieb mit 3000 Hüben/min ein Phasenanschnitt der verbleibenden Halbwellen durchgeführt wird. Die Speise- und Steuerschaltung enthält deshalb zusätzlich zur Halbwellenunterdrückungsschaltung ein aus festen Widerständen und einem Kondensator bestehendes Zeitglied. Der Phasenanschnitt während des Betriebs mit 3000 Hüben/min bewirkt eine Reduzierung der Leistung des Gerätes und vermindert damit die Gefahr einer Uberhitzung der Schwingankerspule. Ausserdem kann durch geeignete Bemessung der - festen - Grösse des Phasenanschnittes eine gute Zerstäubungsqualität auch bei diesem Betrieb mit reduzierter Frequenz erreicht werden.

Allen beschriebenen vorbekannten Geräten gemeinsam ist jedoch der Nachteil, dass für die Bedienungsperson keine Möglichkeit besteht, den Zerstäubungsgrad wesentlich und unabhängig von der Ausstossmenge zu verändern. Es ist nämlich in der Praxis keineswegs so, dass eine Feinstzerstäubung (hoher Zerstäubungsgrad) stets erstrebenswert ist, vielmehr gibt es häufig Fälle, bei denen eine Zerstäubung in gröbere Partikel oder gar ein sogenannter nässender Strahl wünschenswert ist; so ist insbesondere beim Verspritzen von Insektiziden eine gröbere Zerstäubung einer Feinstzerstäubung (nebelartige Wolke) vorzuziehen.

Aufgabe der vorliegenden Erfindung ist es deshalb, die Spritzpistole der zuletzt erwähnten Art derart zu verbessern, dass sich die Möglichkeit ergibt, zusätzlich zur Frequenzumschaltung auch den Zerstäubungsgrad der durch die Pistole versprühten Farbe über einen weiten Bereich beliebig zu verändern. Die Lösung dieser Aufgabe ist gekennzeichnet durch einen zweiten Phasenanschnittskreis mit einen veränderbaren Widerstand enthaltendem Zeitglied, wobei in der einen Schaltstellung des Umschalters der Stromweg durch den zweiten Phasenanschnittskreis, in der anderen Schaltstellung durch die Halbwellenunterdrückungsschaltung und den ersten Phasenanschnittskreis führt, und wobei der veränderbare Widerstand ein Potentiometer mit zweipoligem Drehschalter ist, der als der Umschalter in seiner einen Schaltstellung geschlossen ist, während der Widerstandswert des Potentiometers durch Knopfdrehung veränderbar ist, und der in seiner anderen Schaltstellung geöffnet ist, wobei dann der Widerstandswert des Potentiometers auf einem festen Widerstandswert gehalten ist.

Nun war zwar aus der DE-A 3038685 bereits eine Steuerschaltung mit Halb- und Vollwellenbetrieb und Phasenanschnitt bekannt, bei welcher der Phasenanschnitt bei Vollwellenbetrieb durch einen Potentiometer veränderbar ist, jedoch handelt es sich dabei um eine Steuereinheit für Schüttelzuführer, also um Geräte mit völlig anderer Arbeitsweise, bei denen keine Zerstäubung erfolgt und damit auch die hier interessierenden Probleme der Zerstäubung nicht auftreten.

Die Schaltung nach der Erfindung enthält also ein zweites Zeitglied mit veränderbarem Widerstand, so dass die Zeitkonstante dieses Zeitglieds und damit die Grösse des Phasenanschnitts veränderbar sind, mit der Folge einer Veränderung des Zerstäubungsgrades. Die Bedienungsperson kann also zwischen einem Betrieb mit 6000 Hüben/min und 3000 Hüben/min wählen, kann die Farbdurchsatzmenge - mechanisch - in weiten Grenzen ändern und kann darüberhinaus elektronisch den gewünschten Zerstäubungsgrad zwischen Feinstzerstäubung und nässendem Strahl einstellen, ohne dass es dabei zu Problemen bezüglich der Erhitzung der Schwingankerspule, einer Überbeanspruchung des Schwingankers, einer Überforderung der Rückführfeder oder dergleichen kommt.

Weitere Einzelheiten der Erfindung ergeben sich aus der nachstehenden Beschreibung eines Ausführungsbeispiels und der Zeichnung. Auf der Zeichnung zeigen:

Fig. 1 die erfindungsgemässe Schaltung in einer Schaltstellung entsprechend einem Betrieb des Schwingankers - und damit des Pumpkolbens - mit 6000 Hüben/min, und

Fig. 2 dieselbe Schaltung in einer Schaltstellung entsprechend einem Betrieb des Schwingankers mit 3000 Hüben/min.

Gemäss der Zeichnung liegt die Schaltung zwischen dem Anschluss an das übliche Wechselstromnetz (220 V, 50 Hz) und einer mit 10 bezeichneten Spule, welche die von der Schaltung zu speisende und zu steuernde Spule des Schwingankers zum Antrieb des Pumpkolbens einer Spritzpistole darstellen soll. Die Schaltung besteht im wesentlichen aus vier festen Widerständen 11, 12, 13 und 14, einem veränderbaren Widerstand, nämlich einem Potentiometer 15, zwei Kondensatoren 16 und 17, einer Diode 18, einem Diac 19, einem Triac 20, zwei miteinander mechanisch verbundenen Schaltern 21a und 21b und einem Hauptschalter 22. Die Zusammenschaltung dieser Bauelemente ergibt sich aus den beiden Figuren.

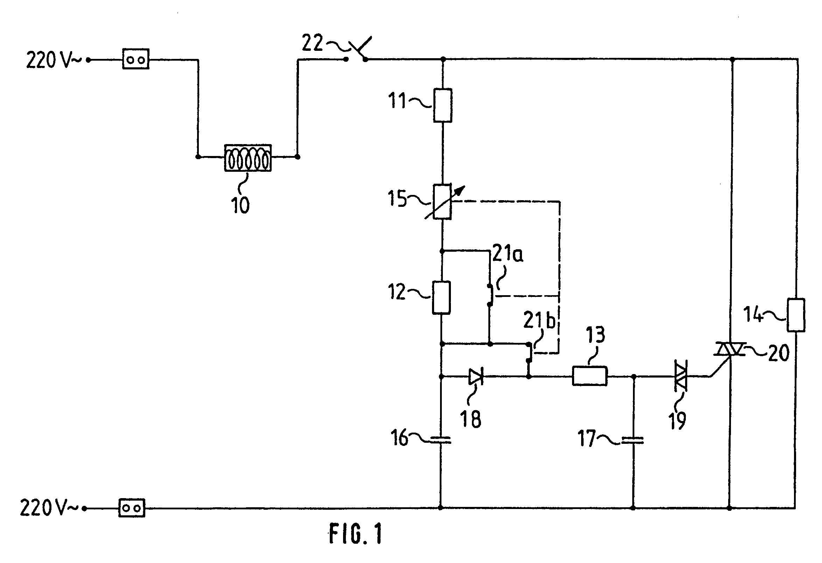

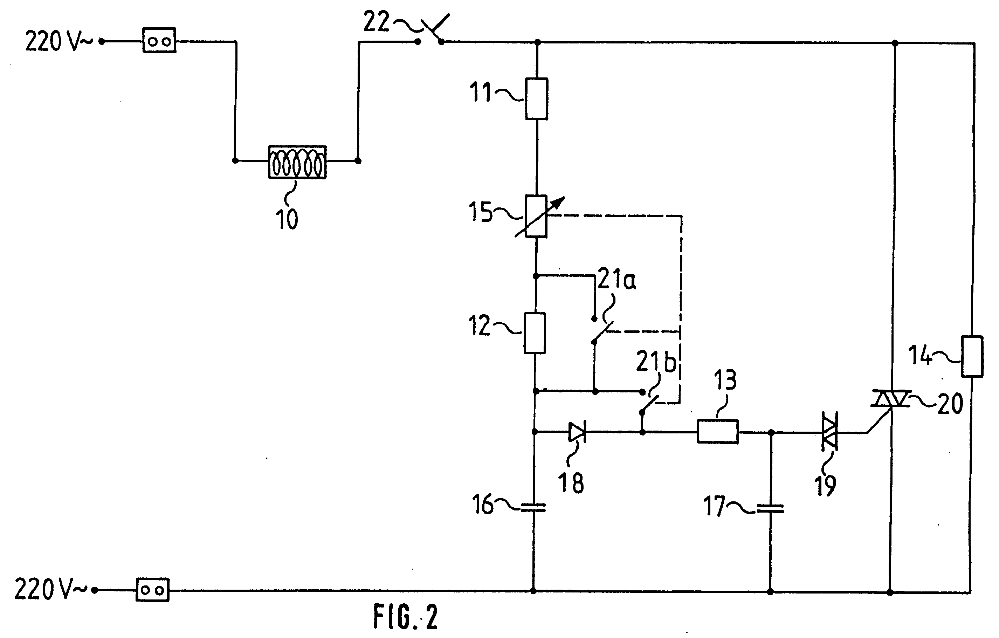

Die erwähnten Bauelemente haben folgende Funktionen. Der Hauptschalter 22 dient zum Ein- und Ausschalten der gesamten Schaltung und ist durch einen an der Pistole befindlichen Schaltknopf betätigbar. Die beiden mechanisch miteinander verbundenen Schalter 21a und 21b sind gemeinsam mit dem an der Pistole befindlichen Potentiometer 15 mit bipolarem Drehschalter verbunden und dienen zum Umschalten des Geräts von 6000 Hübe/min und 3000 Hübe/min bzw. umgekehrt. Der erwähnte bipolare Drehknopfschalter dient ausserdem als Betätigungselement für die Verstellung des Potentiometers 15, wobei der Anschluss des Drehschalters so vorgenommen ist, dass in seiner einen Schaltstellung die Umschalter 21a, 21b geschlossen sind (Fig. 1) und der Widerstandswert des Potentiometers 15 durch Knopfdrehung über den gesamten Potentiometerbereich veränderbar ist, wohingegen in der anderen Schaltstellung die Umschalter 21a, 21b geöffnet sind und das Potentiometer einen Festwiderstand mit einem Widerstandswert entsprechend dem Maximalwiderstand des Potentiometers darstellt. Bei dem Betrieb mit 6000 Hüben/min (Schalter 21a, 21b gemäss Fig. 1 geschlossen) stellt das Potentiometer 15 zusammen mit dem Widerstand 11 und dem Kondensator 16 ein Zeitglied veränderlicher Zeitkonstante dar. Beim Betrieb mit 3000 Hüben/min (Schalter 21a, 21b gemäss Fig. 2 geöffnet) wirkt die Diode 18 zur Unterdrückung der negativen Halbwellen, wobei bei diesem Betrieb die Widerstände 11, 12 das -jetzt einen Festwiderstand darstellende - Potentiometer 15 und der Kondensator 16 ein Zeitglied fester Zeitkonstante darstellen. Das Triac 20 dient als gesteuertes Leistungsschaltelement zur Durchführung des Phasenanschnittes und das Diac 19 zur Erhöhung der Zündsicherheit des Triacs 20. Der Widerstand 13 und der Kondensator 17 schliesslich dienen dazu, die Schalthysterese zu vermindern.

Wird bei der in Fig. 1 dargestellten Stellung der Umschalter 21a, 21b der Hauptschalter 22 geschlossen, dann durchfliesst der Wechselstrom die Schaltung ungehindert, d.h. es erfolgt keine Halbwellenunterdrückung. Die Spule 10 wird somit mit einer Frequenz von 6000 Hüben/min erregt, und Schwinganker und Pumpkolben werden somit mit dieser Frequenz angetrieben. Die Zündung des Triacs 20 erfolgt jedoch für jede Halbwelle des Wechselstroms mit einer gewissen Zeitverzögerung, deren Grösse durch das Zeitglied 11, 15, 16 gegeben ist. Die Zeitkonstante dieses Zeitglieds kann dabei durch Drehen des Drehknopfes des bipolaren Drehschalters und damit Verstellen des Widerstandswertes des Potentiometers 15 verändert werden, wobei die Zeitverzögerung und damit der Phasenanschnitt am kleinsten ist, wenn das Potentiometer auf seinen minimalen Widerstandswert - im allgemeinen der Wert Null - eingestellt ist, während die Zeitverzögerung und damit der Phasenanschnitt am grössten ist, wenn das Potentiometer 15 seinen maximalen Widerstandswert besitzt. Der Phasenanschnitt kann also bei diesem Betrieb mit 6000 Hüben/min durch Verstellen des Potentiometers 15 über einen gewissen Bereich stufenlos verändert werden, mit der Folge einer Veränderung des Zerstäubungsgrades der durch den Pumpkolben unter Druck gesetzten und durch die Zerstäuberdüse der Spritzpistole ver-

3

sprühten Farbe. Dabei ist - bei gegebener Zerstäuberdüse - die Zerstäubung um so feiner, je geringer der Phasenanschnitt ist, und umso grösser, je grösser der Phasenanschnitt ist.

Wird nun der bipolare Drehschalter in seine andere Stellung umgeschaltet, dann öffnen die Umschalter 21a und 21b (Fig. 2), und zugleich wird der Widerstandswert des Potentiometers 15 - unabhängig von der Drehstellung des Drehknopfes - auf seinen Maximalwert eingestellt, so dass das Potentiometer 15 jetzt einen Festwiderstand darstellt. Das Öffnen der Umschalter 21a und 21b bewirkt dabei, dass jetzt durch die Diode 18 jeweils eine Halbwelle des Wechselstroms unterdrückt wird, und zwar die negative Halbwelle. Die Folge davon ist, dass die Spule 10 nur mehr mit der halben Frequenz erregt wird, Schwinganker und Pumpkolben also nur noch mit 3000 Hüben/min arbeiten. Dabei wird auch hier das Triac 20 verzögert gezündet, und zwar aufgrund des Zeitgliedes 11, 12, 15 und 16. Dieses Zeitglied besitzt jedoch eine feste Zeitkonstante, weil - wie erwähnt - nunmehr das Potentiometer 15 als fester Widerstand wirkt, dessen Widerstandswert gleich dem Maximalwiderstand des Potentiometers ist. Es ergibt sich somit auch bei diesem Betrieb mit 3000 Hüben/min ein Phasenanschnitt, der jedoch nicht veränderbar, sondern konstant ist.

Lediglich zum leichteren Verständnis der Erfindung werden nachfolgend für die eben erläuterte Schaltung Zahlenwerte angegeben, die jedoch keinerlei Einschränkung der Erfindung darstellen. So wurden bei einem ganz speziellen Ausführungsbeispiel der Erfindung die Schaltelemente folgendermassen dimensioniert:

| | |
|---|---|
| Widerstand 11: | 1 kΩ |
| Widerstand 12: | 10 kΩ |
| Widerstand 13: | 4,7 kΩ |
| Widerstand 14: | 39 kΩ |
| Potentiometer 15: | 0 bis 100 kΩ |
| Kondensator 16: | 0,1 μF |
| Kondensator 17: | 0,01 μF |

Bei diesem Ausführungsbeispiel wies beim Betrieb 6000 Hübe/min das Zeitglied eine Zeitkonstante zwischen etwa 0,2 und 2,0 msec auf, was bei der Netzfrequenz von 50 Hz einem Phasenanschnitt zwischen 3 und 36° entspricht. Beim Betrieb von 3000 Hüben/min betrug die Zeitkonstante des Zeitglieds etwa 5,5 msec, was einem Phasenanschnitt von 100° entspricht.

Mit der Erfindung ist es dem die Spritzpistole Betätigenden möglich, beim Betrieb mit 6000 Hüben/min den Zerstäubungsgrad beliebig zu wählen, und zwar durch Drehen des Potentiometer-Drehknopfes von Feinstzerstäubung (Widerstandswert des Potentiometers = 0, minimaler Phasenanschnitt) bis zu einer nässenden Grobzerstäubung (Potentiometer auf höchstem Widerstandswert, maximaler Phasenanschnitt). Dabei kann diese Wahl des Zerstäubungsgrades für jeden - mechanisch eingestellten - Farbdurchsatz erfolgen, wobei die Farbmenge im allgemeinen von 100% bis zu etwa 35% gedrosselt werden kann. Die Bedienungsperson kann aber auch auf den Betrieb mit 3000 Hüben/min umschalten, wobei dann der Farbdurchsatz auf 50% gesenkt ist und mechanisch bis auf 20% gedrosselt werden kann, und zwar bei gleichbleibender Feinzerstäubung (konstanter Phasenanschnitt); dieser Betrieb bietet den Vorteil, dass die Geräuschbildung minimal ist. Dabei ist noch auf folgendes hinzuweisen. Während beim Betrieb mit 6000 Hüben/min, auf welchen Betrieb die Pump- und Zerstäuberanordnung mechanisch ausgelegt ist, eine Feinzerstäubung ohne bzw. mit minimalem Phasenanschnitt erreicht wird und die Zerstäubung um so gröber ist, je stärker der Phasenanschnitt ist, und zwar in weiten Grenzen unabhängig vom Farbdurchsatz, ist es beim Betrieb mit 3000 Hüben/min, auf den das Gerät an und für sich nicht mechanisch ausgelegt ist; so, dass die Feinzerstäubung einen beträchtlichen Phasenanschnitt erfordert, der im allgemeinen grösser ist als derjenige, der bei 6000 Hüben/min bereits zu einem nässenden Strahl führt.

Die erfindungsgemässe Schaltung ist ohne Schwierigkeiten auch in kleine Handspritzpistolen einzubauen, beispielsweise in Art einer Platine.

Wenn in den obigen Ausführungen der Einfachheit halber von Farbe gesprochen wird, so ist darunter selbstverständlich auch jedes andere zerstäubbare Medium zu verstehen.

## Patentansprüche

1. Spritzpistole mit einem Pumpkolben und einer aus einer Spule (10) und einem Schwinganker bestehenden Antriebsordnung, die aus einem Eingang zum Anschluss an ein Wechselstromnetz, einem zur Schwingankerspule (10) führenden Ausgang, einer mittels eines Umschalters (21a, 21b) wahlweise zuschaltbaren Halbwellenunterdrückungsschaltung (18) und aus einem gemeinsam mit der Halbwellenunterdrückungsschaltung (18) durch den Umschalter (21a, 21b) zu- und abschaltbaren Phasenanschnittskreis (11, 12, 15, 16, 20) besteht, der ein aus einem festen Widerstand und einem Kondensator bestehendes Zeitglied (11, 12, 15, 16) aufweist, gekennzeichnet durch einen zweiten Phasenanschnittskreis (11, 15, 16, 20), mit einen veränderbaren

4

Widerstand (15) enthaltendem Zeitglied (11, 15, 16), wobei in der einen Schaltstellung des Umschalters (21a, 21b) der Stromweg durch den zweiten Phasenanschnittskreis (11, 15, 16, 20), in der anderen Schaltstellung durch die Halbwellenunterdrückungsschaltung (18) und den ersten Phasenanschnittskreis (11, 12, 15, 16, 20) führt, und wobei der veränderbare Widerstand (15) ein Potentiometer mit zweipoligem Drehschalter ist, der als der Umschalter (21a, 21b) in seiner einen Schaltstellung geschlossen ist, während der Widerstandswert des Potentiometers durch Knopfdrehung veränderbar ist, und der in seiner anderen Schaltstellung geöffnet ist, wobei dann der Widerstandswert des Potentiometers auf einem festen Widerstandswert gehalten ist.

2. Spritzpistole nach Anspruch 1, dadurch gekennzeichnet, dass die Halbwellenunterdrükkungs-Schaltung aus einer Diode (18) besteht und dass beide Phasenanschnittkreise ein gemeinsames Triac-Schaltelement (20) aufweisen.

3. Spritzpistole nach Anspruch 2, dadurch gekennzeichnet, dass in der Schaltstellung des bipolaren Drehschalters mit geöffnetem Umschalter (21a, 21b) das Potentiometer auf dessen maximalem Widerstandswert festgehalten ist.

4. Spritzpistole nach einem der Ansprüche 1 bis 3, gekennzeichnet durch zumindest einen Widerstand (13) und zumindest einen Kondensator (17) zur Verminderung der Schalthysterese.

5. Spritzpistole nach einem der Ansprüche 1 bis 4, dadurch gekennzeichnet, dass dem Triac-Schaltelement (20) ein Diac-Schaltelement (19) zur Erhöhung der Zündsicherheit zugeordnet ist.

## Claims

1. A spray gun having a pump piston and a drive arrangement which consists of a coil (10) and an oscillating armature and which consists of an input for the connection to an alternating-current mains, an output leading to an oscillating armature coil (10), a half-wave supression circuit arrangement (18) which may be connected at option by means of a change-over switch (21a, 21b) and of a phase-gating circuit (11, 12, 15, 16, 20), which may be connected and disconnected together with the half-wave suppression circuit arrangement (18) by means of the change-over switch (21a, 21b) and which has a time function element (11, 12, 15, 16) consisting of a fixed resistor and a capacitor, characterised by a second phase-gating circuit (11, 15, 16, 20) with a time function element (11, 15, 16) containing a variable resistor (15), wherein in the one switch position of the change-over switch (21a, 21b) the current path leads through the second phase-gating circuit (11, 15, 16, 20) and in the other switch position leads through the half-wave suppression circuit arrangement (18) and the first phase-gating circuit (11, 12, 15, 16, 20) and wherein the variable resistor (15) is a potentiometer combined with a double-pole rotary switch, acting as the change-over switch (21a, 21b) which in its one switch position is closed, while the resistance value of the potentiometer is variable through rotation of the knob, and in its other switch position is opened, the resistance value of the potentiometer then being kept at a fixed resistance value.

2. A spray gun according to claim 1, characterised in that the half-wave suppression circuit arrangement consists of a diode (18) and in that both phase-gating circuits have a common triac circuit element (20).

3. A spray gun according to claim 2, characterised in that in the switch position of the double-pole rotary switch with change-over switch (21a, 21b) opened, the potentiometer is kept at its maximum resistance value.

4. A spray gun according to one of claims 1 to 3, characterised by at least one resistor (13) and at least one capacitor (17) for reducing switching hysteresis.

5. A spray gun according to one of claims 1 to 4, characterised in that a diac circuit element (19) for increasing the ignition safety is co-ordinated with the triac circuit element (20).

## Revendications

1. Pistolet pulvérisateur comportant un piston de pompe et un dispositif d'entraînement constitué par une bobine (10) et une armature oscillante, lequel comporte une entrée allant au raccordement à un réseau de courant alternatif, une sortie allant à la bobine d'armature oscillante (10), un montage de suppression des demi-ondes (18) pouvant être connecté au choix au moyen d'un commutateur (21a, 21b) et un circuit de retard de phase (11, 12, 15, 16, 20) pouvant être mis en circuit ou hors circuit en même temps que le montage de suppression de demi-ondes (18) au moyen du commutateur (21a, 21b) et comportant un élément temporisateur (11, 12, 15, 16) constitué d'une résistance fixe et d'un condensateur, caractérisé par un second circuit de retard de phase (11, 15, 16, 20) comportant un élément de temporisation (11, 15, 16) contenant une résistance variable (15), le courant passant, dans l'une des positions du commutateur (21a, 21b) par le second circuit de retard de phase (11, 15, 16, 20), et dans l'autre position, par le montage de suppression de demi-ondes (18) et par le premier circuit de retard de phase (11, 12, 15, 16, 20), et la résistance variable (15) étant un potentiomètre muni d'un commutateur bipolaire qui, en tant que commutateur (21a, 21b) est fermé dans l'une de ses positions, tandis qu'en tournant le bouton on peut faire varier la valeur de résistance du potentiomètre, et qui, dans son autre position est ouvert, la valeur de résistance du potentiomètre étant alors maintenue à une valeur fixe.

2. Pistolet pulvérisateur selon la revendication 1, caractérisé en ce que le montage de suppression des demi-ondes est constitué par une diode (18) et les deux circuits de retard de phase comportent un élément de commande à triac (20).

3. Pistolet pulvérisateur selon la revendication 2, caractérisé en ce que, dans la position du commutateur bipolaire rotatif dans laquelle les commutateurs (21a, 21b) sont ouverts, le potentiomètre est maintenu a sa valeur de resistance maximale.

4. Pistolet pulvérisateur selon l'une quelconque des revendications 1 à 3, caractérisé en ce qu'il comporte au moins une résistance (13) et au moins un condensateur (17) pour réduire l'hystérésis de commutation.

5. Pistolet pulvérisateur selon l'une quelconque des revendications 1 à 4, caractérisé en ce qu'un element de commande à diac (19) est affecté a l'élément de commande à triac (20) pour augmenter sa sécurité d'amor-cage.

FIG. 1

FIG. 2

EP 0 076 510 B2